(19) Europäisches Patentamt
European Patent Office
Office européen des brevets

(11) Numéro de publication: **0 316 206 B1**

(12) # FASCICULE DE BREVET EUROPEEN

(45) Date de publication du fascicule du brevet: **05.09.90**

(51) Int. Cl.⁵: **G01N 17/00**, G01N 21/47

(21) Numéro de dépôt: **88402540.4**

(22) Date de dépôt: **07.10.88**

(54) **Procédé et appareil de détection des modifications d'un état de surface et de contrôle de celui-ci.**

(30) Priorité: **09.10.87 FR 8713969**

(43) Date de publication de la demande:
**17.05.89 Bulletin 89/20**

(45) Mention de la délivrance du brevet:
**05.09.90 Bulletin 90/36**

(84) Etats contractants désignés:
**AT BE CH DE ES FR GB GR IT LI LU NL SE**

(56) Documents cités:
**FR-A-1 501 766**
**FR-A-2 554 595**

**N.T.I.S. TECH.NOTES, no. H, septembre 1983, page 4, Springfield, Virginia, US; "Accelerated corrosion test for antifreeze compounds"**

(73) Titulaire: **LYONNAISE DES EAUX Société Anonyme, 52 rue de Lisbonne, F-75008 Paris(FR)**

(72) Inventeur: **Gabriel, Jean-Marie, 220 Avenue de Versailles, F-75016 Paris(FR)**
Inventeur: **Cognet, Louis, 9 bis route de Croissy, F-78110 Le Vésinet(FR)**
Inventeur: **Semet, Robert, 8 avenue Leclerc, F-69007 Lyon(FR)**
Inventeur: **Courtois, Gilles, Résidence Carrière Blanche, Le Tilleul F-69130 Ecully(FR)**

(74) Mandataire: **Cournarie, Michèle et al, OFFICE BLETRY R.& G. ROGER-PETIT & R.BLETRY 2, boulevard de Strasbourg, F-75010 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 316 206 B1

ACTORUM AG

## Description

L'invention concerne un procédé et un appareil de détection des modifications d'un état de surface et de contrôle de celui-ci, et notamment pour une surface en contact avec un liquide circulant dans un réseau de tuyauteries.

Les dépôts dans les réseaux de tuyauteries existent dans tous les domaines, que les liquides soient ou non de l'eau. Dans le cas de l'eau, on peut citer les problèmes créés dans les réseaux d'eau potable, d'eau industrielle, d'eau de chaudières ou de circuits de refroidissement, etc.

Les dépôts peuvent être formés par du carbonate de calcium (tartre), des oxydes métalliques, des salissures atmosphériques dans les circuits ouverts, des corps microbiens ou encore des produits de corrosion. Dans le cas de mélanges ou de solutions de produits divers, d'autres types de dépôts peuvent se rencontrer (par exemple du fait de la précipitation des produits en solution).

Les liquides peuvent également attaquer la surface des tuyauteries, et en particulier une corrosion est due à l'attaque d'un métal, et généralement du fer, par l'eau car thermodynamiquement, ces deux corps ne présentent pas de domaine connu de stabilité dans les conditions naturelles.

Les inconvénients de ces phénomènes sont considérables. Les dépôts produisent des bouchages progressifs, entraînant la diminution du débit ou l'augmentation de la perte de charge, et réduisent la capacité d'échange thermique tandis que la corrosion fragilise les tuyauteries et peut conduire à leur rupture.

Dans les eaux naturelles, l'équilibre pratique du bicarbonate de calcium avec le dioxyde de carbone est régi par des lois assez complexes, et son déplacement peut créer des réactions chimiques de dissolution (agressivité) ou de dépôt (entartrage) du carbonate de calcium, qui peuvent se superposer aux simples réactions électrochimiques de corrosion qui sont spécifiques des métaux.

Des méthodes thermodynamiques de calcul ont été développées pour tenter d'apprécier le caractère incrustant ou corrosif des eaux. Le nombre même de ces méthodes (méthode de Tillmans, méthode de Langelier et diagramme de Hoover, méthode d'Hallopeau, diagramme de Franquin et Marécaux...), témoigne de la difficulté de cette approche. En effet, elles sont fondées sur l'étude de solutions pures, dans des conditions déterminées de pH, de température et de concentration, et ne peuvent pas rendre compte de la complexité des cas pratiques. En outre le résultat du calcul est souvent du type oui ou non quant à la possibilité d'un précipitation, mais ne permet pas l'étude cinétique du phénomène.

Pour pallier ces inconvénients, des méthodes et des appareils ont été développés pour réaliser sur l'eau même du circuit une représentation éventuellement accélérée des phénomènes de façon à les corriger et éventuellement les prévenir.

Une première méthode consiste à placer des thermocouples sur un circuit particulier du circuit principal et à mesurer les variations du coefficient d'échange thermique. Cette méthode permet d'apprécier l'état d'un appareil sans avoir à le visiter, par exemple dans le cas des circuits de réfrigération des centrales thermiques. Elle ne permet donc pas de prévoir l'entartrage mais de la constater, à condition de maintenir dans le circuit particulier les conditions du circuit principal, en particulier en ce qui concerne la température. Elle est d'application longue puisque le phénomène se produit dans les conditions réelles de fonctionnement et d'autre part, le nettoyage du circuit particulier après entartrage s'avère difficile.

Une autre méthode utilise la mesure de la variation de l'intensité au cours d'un mise sous potentiel constant (de l'ordre de - 1V, par rapport à une électrode de référence au calomel saturé). L'enregistrement de la variation d'intensité renseigne sur l'entartrage de l'électrode constituée par le métal à étudier. L'appareil contenant l'échantillon métallique, l'électrode de référence et l'électrode auxiliaire, dans l'eau dérivée du circuit principal, est placé dans un bain thermostaté. Cette méthode a l'avantage sur la précédente de permettre de prévoir l'entartrage, par exemple en 3 heures à 40°. Elle présente cependant deux inconvénients : on ne peut changer la sensibilité sans changer la température ou le potentiel imposé puisque le même moyen qui est utilisé pour provoquer l'entartrage et pour le mesurer.

D'autre part comme c'est le bain lui-même qui peut être éventuellement chauffé, et non l'échantillon métallique, les conditions sont de ce fait très différentes de la réalité sur la paroi, en particulier dans le cas des échangeurs de chaleur. Ceci fait que le dépôt est en général constitué de la forme calcite du carbonate du calcium, alors que dans la réalité, on obtient la forme aragonite ou une association des deux formes selon la température de la paroi de dépôt.

Des problèmes similaires se posent dans les phénomènes de dépôt ou de corrosion en présence de liquides autres que les eaux naturelles.

D'autre part, selon N.T.I.S. TECH. NOTES, N° H, Septembre 1983; page 4, Springfield, Virginia, US, on accélère les effets corrosifs d'un bain de liquide par chauffage de ce liquide et application d'une tension entre l'anode à corroder et une cathode. Il n'y a pas de circulation du liquide, et c'est le bain qui est chauffé.

Selon FR-A 1 501 766, on détecte les variations, d'un point à un autre, de l'état de surface d'un produit, en mesurant le dégré d'absorption d'un rayon infrarouge réfléchi sur la surface.

Pour pallier ces inconvenients, on a cherché à mettre au point un dispositif permettant de créer les conditions du phénomène, avec des paramètres réglables de façon à reproduire les caractéristiques du fonctionnement du circuit réel, ou de créer des caractéristiques accélérant de phénomène, en utilisant un dispositif indépendant du precédent permettant de détecter le phénomène et d'en mesurer l'évolution.

L'invention fournit un procédé pour le détection des modifications d'un état de surface et pour le contrôle de celui-ci, notamment appliqué à un corps dont la surface est à une température donnée et en contact avec un liquide circulant à une température déterminée éventuellement différente de la température dudit corps, dans lequel on met dans le même liquide un corps métallique témoin dont la surface est à une température réglable indépendamment de la température dudit liquide, leur corps témoin servant éventuellement d'électrode portée à un potentiel réglable et on détecte l'état de la surface du corps témoin par mesure de l'intensité d'un rayonnement lumineux réfléchi par au moins une partie formant miroir de la surface du corps témoin.

La mise à la température voulue de la surface du corps témoin, soit simplement en lui laissant prendre la température de son environnement soit en chauffant pour obtenir la température désirée à la surface, permet de suivre le phénomène dans son état normal alors que si l'on procède en plus à un chauffage complémentaire et/ou à une mise sous potentiel de la surface du corps témoin, on accélère le phénomène et cela permet de faire des prévisions.

La détection par mesure de l'intensité d'un rayonnement, un rayonnement infrarouge par exemple, réfléchi par au moins une partie formant miroir de la surface du corps témoin est totalement indépendante de la formation du phénomène à détecter et, de ce fait, on peut modifier les conditions d'apparition du phénomène sans toucher aux conditions de détection.

L'invention fournit également un dispositif de mise en oeuvre du procédé, qui comporte une cellule comportant une arrivée et une sortie de liquide, deux électrodes reliées à un potentiostat, l'une d'entre elles étant constituée par le corps témoin, ainsi qu'une électrode de référence, le corps témoin comportant des moyens de chauffage et au moins une partie de la surface du corps témoin constituant un miroir sur lequel est dirigé un faisceau lumineux provenant d'un émetteur de rayonnement lumineux et qui le réfléchit vers un récepteur de rayonnement lumineux.

Selon un mode de réalisation de la cellule, le corps témoin est constitué par un tube creux comportant un méplat qui sert de miroir et les moyens de chauffage sont constitués par une bougie chauffante placée à l'intérieur du tube.

Le procédé peut s'appliquer au contrôle de l'état de surface d'un réseau de tuyauteries en plaçant le dispositif soit directement dans le réseau principal soit dans un réseau secondaire reproduisant les conditions du réseau principal, avec ou sans accélération du phénomène. Le procédé et le dispositif peuvent également être utilisès pour des études sur des liquides naturels ou synthétiques.

La surface du corps témoin, parfois appelée simplement surface témoin dans la description et les revendications, est une surface sur laquelle se produit un phénomène similiare quantitativement et qualitativement à celui qui se produit réellement dans le réseau de tuyauteries. Il peut s'agir d'une surface de même composition ou d'une surface légèrement différente mais ayant le même comportement que la surface réelle. Il faudra toutefois tenir compte du fait que la surface témoin étant initialement polie pour être réfléchissante, le démarrage du phénomène pourra être modifié.

Selon un autre mode de réalisation de la cellule, la partie servant de miroir est une partie plate amovible.

D'autres avantages et caractéristiques de l'invention apparaîtront à la lecture de la description suivante d'un mode de réalisation particulier de l'invention, faite en référence aux dessins annexés dans lesquels :

la figure 1 est un schéma de principe du fonctionnement du dispositif selon l'invention,
la figure 2 est une vue en coupe d'un mode de réalisation d'un dispositif selon l'invention,
les figures 3a à 3d sont des vues des principaux éléments du dispositif de la figure 2;
la figure 4 est un graphique représentant la diminution de la tension mesurée, fonction de l'intensité réfléchie, en fonction du temps, pour des eaux à teneur différentes en carbonate de calcium.

La cellule de détection et de contrôle 1 telle que représentée schématiquement sur la figure 1 comporte un orifice d'arrivée 2 de liquide et un orifice de sortie 3 de liquide. Une électrode de référence 4 est placée dans la cellule. Une électrode principale 5 munie de moyens de chauffage 6 est montée dans la cellule 1 ainsi qu'une électrode auxiliaire 7. Les électrodes 5 et 7 sont reliées aux bornes correspondantes d'un potentiostat 8, l'électrode 5 pouvant être cathode ou anode. Un émetteur 9 de rayonnement lumineux R est positionné selon un certain angle (par exemple de 45°) par rapport à l'électrode 5 et le récepteur 10 est placé de façon à recevoir le rayonnement réfléchi par l'électrode 5. Ce récepteur (une photodiode) est couplé à une résistance aux bornes de laquelle on mesure la tension dont les variations affichées ou enregistrées en 11 rendent compte des modifications de la surface de l'électrode 5.

Le fonctionnement de la cellule est le suivant: on fait circuler le liquide dans la cellule 1 à un débit déterminé. On met la surface de l'électrode 5 à la température désirée, soit en laissant simplement s'établir l'équilibre thermique entre l'électrode principale 5 et le liquide soit en chauffant l'électrode 5, à l'aide des moyens de chauffage 6, à une température correspondant soit à la température de peau interne du réseau de tuyauteries indépendamment de la température du liquide lui-même (dans le cas des échangeurs de chaleur par exemple), soit à une température supérieure pour accélérer le phénomène .

L'état de surface de l'électrode principale se modifie alors en raison du phénomène de dépôt et/ou de corrosion que l'on veut contrôler.

Un rayon R ou faisceau lumineux, par exemple infrarouge est émis par l'émetteur 9 et chemine vers la partie de l'électrode 5 formant miroir d'où il est réflechi vers le récepteur ou photodiode 10. La formation d'un dépôt ou la corrosion de la surface formant miroir diminuant l'intensité du faisceau lumineux réfléchi, on observe sur le dispositif de lecture 11 une diminution de la tension fournie en fonction du temps.

Dans ce cas, le procédé a un rôle de contrôle de l'apparition du phénomène mais il permet cependant, contrairement aux techniques antérieures, de reproduire le phénomène réel. Ceci est particulièrement intéressant dans le cas de l'entartrage où la proportion des formes calcite et aragonite du carbonate de calcium varie entre autres selon la température de formation.

Selon une application particulièrement intéressante du procédé, après avoir obtenu la température voulue pour l'électrode 5, on la met sous tension. Pour ce faire, on introduit l'électrode de référence 4 et on applique aux électrodes (cathode 5, et électrode auxiliaire 7 ou vice versa) un potentiel constant par rapport à l'électrode de référence 4 grâce au potentiostat 8. Cette mise sous potentiel constant accélère le phénomène à étudier et permet donc de déterminer sa cinétique et de prévoir l'évolution du phénomène en fonction du temps.

Les figures 2 et 3a à 3d illustrent un mode de réalisation particulier d'un dispositif mettant en oeuvre le schéma de principe de la figure 1.

Ce dispositif a été particulièrement conçu pour l'étude de l'entartrage mais pourrait être utilisé, avec des modifications simples si nécessaire tenant en particulier aux caractéristiques physico-chimiques du liquide en cause, pour l'étude de phénomènes autres que l'entartrage. Toutefois pour des raisons de simplification et de clarté, la description de ce dispositif se réfèrera à un dispositif d'entartrage.

La figure 2 représente la cellule d'entartrage 20 dans son ensemble. Elle est constituée d'un corps 21 en verre (produit inerte vis-à-vis de l'eau et de la réaction d'électrolyse) de forme générale cylindrique, disposé verticalement et fermé à ses deux extrémités par des obturateurs. Le corps 21 comporte un orifice d'arrivée 22 d'eau et un orifice de sortie d'eau 23, le débit dans le corps étant assuré par exemple par une pompe péristaltique (non représentée). Sur la canalisation d'entrée conduisant à l'orifice 22 est montée une électrode de référence 24. On utilise de préférence une électrode au calomel saturé, simple et stable mais on pourrait tout aussi bien utiliser un autre type d'électrode de référence (à fil de platine par exemple). L'électrode principale 25 est constituée par un tube creux par exemple en acier inoxydable fixée dans la cellule 20 ou la traversant de part en part ainsi que les obturateurs, pour permettre son démontage éventuel. Dans le cas d'un entartrage, elle joue le rôle de cathode alors que, pour l'étude d'une corrosion elle joue le rôle d'anode; dans la description de la cellule d'entartrage, on appelera l'électrode principale cathode et l'électrode auxiliaire anode 27. Une bougie chauffante 26 est logée dans la cathode creuse et est reliée à une source d'énergie de chauffage réglable appropriée (non représentée). L'anode 27 est un tronçon de tube creux, concentrique à la cathode et de diamètre supérieur. La bougie 26 et l'anode sont placées dans la région centrale de la cellule 20 afin de faciliter le positionnement de l'émetteur-récepteur de rayonnement lumineux. L'anode 27 est surmontée d'un dispositif de support 30 qui peut être tronconique comme représenté sur le dessin mais qui peut bien entendu avoir toute forme ou toute structure appropriée. L'anode et la cathode sont reliées de façon classique à un potentiostat (non visible) qui permet d'afficher un potentiel constant déterminé par rapport à l'électrode de référence 24. On utilise avantageusement dans une cellule d'entartrage un potentiel de -1,060 V par rapport à l'électrode au calomel saturé. Bien entendu, la valeur choisie dépendra du liquide en circulation et de l'accélération voulue pour le phénomène considéré.

Un émetteur-récepteur classique (non représenté) est positionné à l'extérieur de la cellule 20 de telle sorte que le rayonnement lumineux R (voir figure 3c) qu'il émet vient frapper la cathode 25. Afin de permettre la réflexion du rayon ou faisceau incident, au moins une partie de la cathode 25 forme un miroir. Ce peut être un méplat 28 formé sur toute la longueur du tube constituant la cathode ou sur seulement la partie centrale ou toute autre section appropriée. Ce peut également être une pastille réfléchissante placée de façon amovible dans un évidement d'un tube métallique ou non. L'utilité de cette pastille amovible sera décrite ci-après.

A titre d'exemple, on peut utiliser comme émetteur, un émetteur infrarouge alimenté sous 7V et placée à 45° par rapport à la surface réfléchissante et, comme récepteur du faisceau lumineux réfléchi, une photodiode alimentée sous 15V et positionnée egalement à 45° par rapport à la surface formant miroir 28 de la cathode 25.

Pour permettre le cheminement de faisceau lumineux jusqu'au miroir, il faut prévoir des lumières disposées de façon appropriée selon le positionnement de l'émetteur-récepteur et pratiquées dans l'anode permettant le passage des rayons lumineux. On peut envisager deux lumières espacées de 90° soit horizontalement si le faisceau lumineux chemine dans un plan horizontal soit verticalement si le faisceau lumineux est dans un plan vertical. On peut également ne prévoir qu'une lumière allongée s'étendant sur plus de 90° (et de manière générale 2 fois l'angle d'incidence du faisceau lumineux). Sur la figure 3b, il est représenté à titre d'exemple une lumière 29 allongée verticalement, alors que sur les figures 3a et 3c il y a 2 lumières espacées à 90° dans le plan horizontal.

Selon un autre mode de réalisation possible du dispositif, on peut prévoir la transmission du faisceau lumineux par des fibres optiques jusqu'au voisinage de la surface formant miroir. Les fibres traversent le corps 21 de façon étanche, et l'anode si nécessaire. L'angle d'incidence est choisi comme on le désire, et peut même être de 90° si on utilise des fibres optiques coaxiales.

L'utilisation de fibres optiques pour l'acheminement du rayonnement lumineux est particulièrement avantageuse lorsque l'eau, ou le liquide de manière générale, à étudier a un degré de coloration ou de turbidité élevé, ce qui a pour conséquence d'absorber une partie de la lumière émise avant sa réflexion sur le miroir et de fausser les résultats de la mesure. On peut toutefois pallier cet inconvénient en utilisant un émetteur-récepteur à double faisceau si l'on ne dispose pas d'un appareil équipé de fibres optiques.

L'exemple suivant est donné à titre illustratif du fonctionnement du dispositif.

Exemple.

On utilise un appareil similaire à celui décrit précédemment et représenté sur la figure 2, dans les conditions de fonctionnement suivantes et en faisant les essais sur cinq eaux différentes obtenues par mélange d'eau naturelle et d'eau désionisée dont la composition est donnée dans le tableau suivant.

Conditions de fonctionnement :

- Electrode de référence 24 : électrode au calomel saturé.
- Tension aux électrodes : 1,080 V par rapport à l'électrode 24.
- Débit (réglable entre 9 et 20 ml/mn): 9 ml/mn
- Temperature obtenue avec une bougie 26 de 100W/220V:70°C
- Emetteur IR : alimenté sous 7 V - Réglé à 940nm.
- Récepteur : photodiode alimentée sous 15V.
- Angle d'incidence : 45°.

| Eau n° | Eau naturelle | Eau désionisée | Teneur en $Ca^{++}$ et $HCO_3^-$ en meq/l |
|---|---|---|---|
| 1 | 100 % | 0 % | 5 |
| 2 | 75 % | 25 % | 4 |
| 3 | 50 % | 50 % | 2,5 |
| 4 | 25 % | 75 % | 1,25 |
| 5 | 100 % + ajouts de $CaCO_3$ | 0 % | 10 |

On obtient les courbes représentées sur le graphique de la figure 4, où les courbes portent le N° du type d'eau indiqué dans le tableau.

On constate, pour les plus faibles teneurs en carbonate de calcium (eaux n°3 et 4), qu'après une courte période de dépôt, les courbes tendent à être des droites horizontales; il n'y a plus de modification de l'état de surface donc plus d'entartrage. Au contraire pour les teneurs plus élevées, l'intensité transmise continue à décroître. On note toutefois qu'après un certain temps, de l'ordre de 30 minutes, les courbes ont une portion sensiblement linéaire. Cette caractéristique permet de définir un intervalle de temps, par exemple de 10mn, situé entre 30 et 40 mn, sur lequel on peut mesurer la pente des courbes et apprécier le pouvoir entartrant de l'eau par calcul d'un indice approprié.

Cet indice permet en particulier lorsque l'appareil est utilisé dans un but de contrôle (sans mise sous tension) de déceler une variation anormale du pouvoir entartrant et donc de déclencher une alarme ou d'agir sur des dispositifs compensateurs appropriés de façon automatique ou manuelle. A cet effet l'appareil de lecture et/ou d'enregistrement 11 peut être relié à une unité de calcul qui, si elle détermine que la pente de la courbe de tension est supérieure à une valeur prédéterminée, fournit un signal de sortie déclenchant une alarme, par exemple.

Lorsque le dispositif est employé dans un but d'étude des eaux avant leur utilisation dans les installations réelles, on obtient rapidement grâce à la mise sous tension, des résultats permettant de prévoir le comportement, par exemple en 3h à 40°C alors que dans les modèles expérimentaux classiques, les études demandent jusqu'à quinze jours.

Par ailleurs, l'électrode peut être facilement nettoyée, et on peut dans la même manipulation, calculer l'épaisseur du dépôt et donc connaître son influence sur les échanges thermiques en particulier.

Dans ce but, après fonctionnement du dispositif pendant le temps voulu, par exemple 40 minutes, pour assurer le dépôt et mesurer la pente de la courbe de potentiel, on coupe le chauffage et on inverse le courant d'électrolyse en le fixant à 10 m A.

On provoque ainsi une réaction anodique :

$$2H_2O \rightarrow O_2 + 4\ H^+ + 4\ e^-$$

Le pH baisse au niveau de l'électrode et les protons formés viennent redissoudre le tartre déposé précédemment suivant la réaction :

$$CaCO_3 + H^+ \rightarrow HCO_3^- + Ca^{++}$$

La surface réfléchissante est ainsi nettoyée progressivement, et ce nettoyage est achevé quand la tension mesurée revient à sa valeur initiale.

L'électrolyse ayant lieu à courant constant, on peut appliquer la loi de Faraday et calculer en conséquence la masse de carbonate de calcium dissoute connaissant le temps de redissolution.

Connaissant la densité de $CaCO_3$, on peut calculer l'épaisseur de tartre formée.

En outre, du fait que l'on peut faire varier la température de la surface réfléchissante indépendamment tant des autres paramètres de formation que du système de détection, on peut étudier les formes cristallines du dépôt formé en fonction de la température et vérifier que l'on obtient la forme calcite, la forme aragonite ou une combinaison d'entre elles, selon la température appliquée.

A cet effet, il peut être souhaitable de prévoir une surface réfléchissante amovible, qui pourra être enlevée de l'appareil avant nettoyage pour examen du dépôt formé par d'autres techniques, microscopie électronique, spectrométrie infrarouge, etc. Si la surface réfléchissante amovible est une pastille, le dépôt formé aura la forme d'une pastille et pourra être analysé directement dans un spectromètre infrarouge.

Le description précédente d'un mode de réalisation particulier du dispositif pour une application particulière (entartrage) n'a bien entendu été donnée qu'à titre illustratif et il est évident que l'invention trouvera de nombreuses applications tant de contrôle que de prévision et d'étude dans tous les domaines où peuvent se produire des phénomènes de modification de l'état d'une surface en contact avec un liquide.

## Revendications

1. Procédé de détection des modifications d'un état de surface et de contrôle de celui-ci, notamment pour un corps dont la surface est à une température donnée et en contact avec un liquide circulant à une température déterminée éventuellement différente de la température de ladite surface, caractérisé en ce que l'on met dans le même liquide un corps métallique témoin dont la surface est à une température réglable indépendamment de la température dudit liquide, et éventellement on porte à un potentiel réglable le corps témoin servant d'électrode, et on détecte l'état de la surface du corps témoin par mesure de l'intensité d'un rayonnement lumineux réfléchi par au moins une partie formant miroir de la surface du corps témoin.

2. Procédé selon la revendication 1, caractérisé en ce qu'on chauffe la surface du corps témoin jusqu'à une température choisie que l'on maintient constante puis on détecte les modifications de l'état de la surface du corps témoin en fonction du temps.

3. Procédé selon la revendication 1, caractérisé en ce qu'on laisse la surface du corps témoin à la température ambiante et on détecte les modifications qu'elle subit en fonction du temps.

4. Procédé selon la revendication 1, caractérisé en ce qu'après mise à la température voulue de la surface du corps témoin, on porte le corps témoin servant d'électrode à un potentiel accélérant les modifications de l'état de surface et on détecte les modifications de l'état de la surface du corps témoin en fonction du temps.

5. Procédé selon l'une quelconque des revendications 1 à 4, caractérisé en ce que le rayonnement lumineux est un rayonnement infrarouge.

6. Procédé selon l'une quelconque des revendications 1 à 5, caractérisé en ce que le liquide est de l'eau et on détecte les modifications dues à l'entartrage.

7. Dispositif de mise en oeuvre du procédé selon la revendication 1, caractérisé en ce qu'il comporte une cellule (1) comprenant un orifice d'arrivée (2) de liquide et un orifice de sortie (3) de liquide, deux électrodes (5, 7) reliées à un potentiostat (8), l'une d'entre elles (5) étant constituée par le corps témoin, ainsi qu'une électrode de référence (4), le corps témoin (5) comportant des moyens de chauffage (6), et au moins une partie de la surface du corps témoin constituant un miroir sur lequel est dirigé un faisceau lumineux (R) provenant d'un émetteur (9) de rayonnement lumineux et qui le réfléchit vers un récepteur (10) de rayonnement lumineux.

8. Dispositif selon la revendication 7, caractérisé en ce que le corps témoin est constitué par un tube creux (25) comportant un méplat (28) servant de miroir et les moyens de chauffage sont constitués par une bougie chauffante (26) placée à l'intérieur du tube.

9. Dispositif selon la revendication 8, caractérisé en ce que ladite partie constituant le miroir est une partie plate amovible.

10. Dispositif selon la revendication 7, caractérisé en ce que le rayonnement lumineux est acheminé par des fibres optiques.

11. Dispositif selon l'une quelconque des revendications 7 à 10, caractérisé en ce que l'émetteur est un émetteur infrarouge et le récepteur est constitué par une photodiode couplée à une résistance aux bornes de laquelle on mesure la tension.

12. Dispositif selon l'une ou l'autre des revendications 10 et 11, caractérisé en ce que l'émetteur (4) et le récepteur (10) sont disposés à 45° par rapport au miroir.

13. Utilisation du dispositif selon l'une quelconque des revendications 7 à 12, pour la détection de l'entartrage dans un réseau d'eau.

**Patentansprüche**

1. Verfahren zum Feststellen von Änderungen eines Oberflächenzustands und zur Überwachung desselben, insbesondere für einen Körper, dessen Oberfläche sich auf einer gegebenen Temperatur und in Kontakt mit einer strömenden Flüssigkeit bestimmter Temperatur befindet, die gegebenenfalls verschieden ist von der Temperatur der genannten Oberfläche, dadurch gekennzeichnet, daß man einen metallischen Probekörper in derselben Flüssigkeit vorsieht, dessen Oberfläche sich auf einer unabhängig von der Temperatur der Flüssigkeit einstellbaren Temperatur befindet, und daß man gegebenenfalls den Probekörper als Elektrode auf ein einstellbares Potential bringt und daß man den Oberflächenzustand des Probekörpers durch Messung der Intensität einer von mindestens einem Teil der Oberfläche des Probekörpers als Spiegel reflektierten Lichtstrahlung feststellt.

2. Verfahren nach Anspruch 1, dadurch gekennzeichnet, daß man die Oberfläche des Probekörpers auf eine gewählte Temperatur heizt, die man konstant hält, bis man die Änderungen des Oberflächenzustands des Probekörpers als Funktion der Zeit feststellt.

3. Verfahren nach Anspruch 1, dadurch gekennzeichnet, daß man die Oberfläche des Probekörpers auf der Umgebungstemperatur beläßt und die Änderungen feststellt, denen er als Funktion der Zeit unterliegt.

4. Verfahren nach Anspruch 1, dadurch gekennzeichnet, daß man den Probekörper, nachdem man seine Oberfläche auf eine gewünschte Temperatur gebracht hat, als Elektrode auf ein Potential bringt, das die Änderungen des Oberflächenzustands beschleunigt, und daß man die Änderungen des Oberflächenzustands des Probekörpers als Funktion der Zeit feststellt.

5. Verfahren nach einem der Ansprüche 1 bis 4, dadurch gekennzeichnet, daß die Lichtstrahlung Infrarotstrahlung ist.

6. Verfahren nach einem der Ansprüche 1 bis 5, dadurch gekennzeichnet, daß die Flüssigkeit Wasser ist und daß man die durch Wassersteinansatz eintretenden Veränderungen feststellt.

7. Vorrichtung zur Durchführung des Verfahrens nach Anspruch 1, dadurch gekennzeichnet, daß sie eine Zelle (1) beinhaltet, die eine Flüssigkeitseinlaßöffnung (2), eine Flüssigkeitsauslaßöffnung (3), zwei an einen Potentiostat (8) angeschlossene Elektroden (5, 7), von denen eine (5) durch den Probekörper gebildet ist, sowie eine Referenzelektrode (4) umfaßt, wobei der Probekörper (5) Heizmittel (6) aufweist und mindestens ein Teil der Oberfläche des Probekörpers einen Spiegel bildet, auf den ein Lichtstrahl (R) von einem Lichtstrahlungssender (9) gerichtet ist und der diesen zu einem Lichtstrahlungsempfänger (10) reflektiert.

8. Vorrichtung nach Anspruch 7, dadurch gekennzeichnet, daß der Probekörper von einem hohlen Rohr (25) gebildet ist, das eine Abflachung (28) als Spiegel aufweist, und daß die Heizmittel von einer Heizpatrone (26) innerhalb des Rohrs gebildet sind.

9. Vorrichtung nach Anspruch 8, dadurch gekennzeichnet, daß der den Spiegel bildende, genannte Teil ein beweglicher oder lösbarer flacher Teil ist.

10. Vorrichtung nach Anspruch 7, dadurch gekennzeichnet, daß zur Führung der Lichtstrahlung optische Fasern vorgesehen sind.

11. Vorrichtung nach einem der Ansprüche 7 bis 10, dadurch gekennzeichnet, daß der Sender ein Infrarotsender ist und daß der Empfänger von einer Photodiode gebildet ist, die mit einem Widerstand verbunden ist, an deren Klemmen man die Spannung mißt.

12. Vorrichtung nach dem einen oder anderen der Ansprüche 10 und 11, dadurch gekennzeichnet, daß der Sender (4) und der Empfänger (10) gegenüber dem Spiegel unter 45° angeordnet sind.

13. Verwendung der Vorrichtung nach einem der Ansprüche 7 bis 12 zur Feststellung der Wassersteinbildung in einem Wassernetz.

## Claims

1. Process for detecting modifications in a surface state and for the monitoring thereof, in particular for a body whose surface is at a given temperature and in contact with a flowing liquid at a determined temperature which optionally may be different from the temperature of the said surface, characterised in that there is put into this same liquid a metallic reference body whose surface is at a temperature which is regulatable independently of the temperature of the said liquid, and optionally the reference body, serving as an electrode, is brought to a regulatable potential, and the surface state of the reference body is detected by measuring the intensity of a luminous radiation reflected by at least a part, which forms a mirror, of the surface of the reference body.

2. Process according to claim 1, characterised in that the surface of the reference body is heated up to a selected temperature, which is kept constant, then the modifications in the surface state of the reference body are detected as a function of time.

3. Process according to claim 1, characterised in that the surface of the reference body is left at ambient temperature, and the modifications which it undergoes are detected as a function of time.

4. Process according to claim 1, characterised in that after the surface of the reference body has been brought to the desired temperature, the reference body serving as an electrode is brought to a potential accelerating the modifications of the surface state, and the modifications of the surface state of the reference body are detected as a function of time.

5. Process according to any one of the claims 1 to 4, characterised in that the luminous radiation is an infra-red radiation.

6. Process according to any one of the claims 1 to 5, characterised in that the liquid is water, and the modifications resulting from the deposition of scale are detected.

7. Device for operating the process according to claim 1, characterised in that it comprises a cell (1) which comprises an inlet orifice (2) for liquid, and an outlet orifice (3) for liquid, two electrodes (5, 7) connected to a potentiostat (8), one (5) of said electrodes being constituted by the reference body, and also a reference electrode (4), the reference body (5) comprising heating means (6), and at least a part of the surface of the reference body constituting a mirror onto which there is directed a luminous beam (R) originating from an emitter (9) of luminous radiation and which reflects it towards a receiver (10) of luminous radiation.

8. Device according to claim 7, characterised in that the reference body is constituted by a hollow tube (25) comprising a flattened portion (28) which serves as a mirror, and the heating means are constituted by a heater plug (26) placed in the interior of the tube.

9. Device according to claim 8, characterised in that the said part which constitutes the mirror is a flat detachable part.

10. Device according to claim 7, characterised in that the luminous radiation is conducted by optical fibres.

11. Device according to any one of the claims 7 to 10, characterised in that the emitter is an infra-red emitter, and the receiver is constituted by a photodiode coupled to a resistor at whose terminals the voltage is measured.

12. Device according to one or the other of claims 10 and 11, characterised in that the emitter (4) and the receiver (10 [sic] are disposed at 45° in relation to the mirror.

13. Use of the device according to any one of the claims 7 to 12, for detecting the deposition of scale in a water supply network.

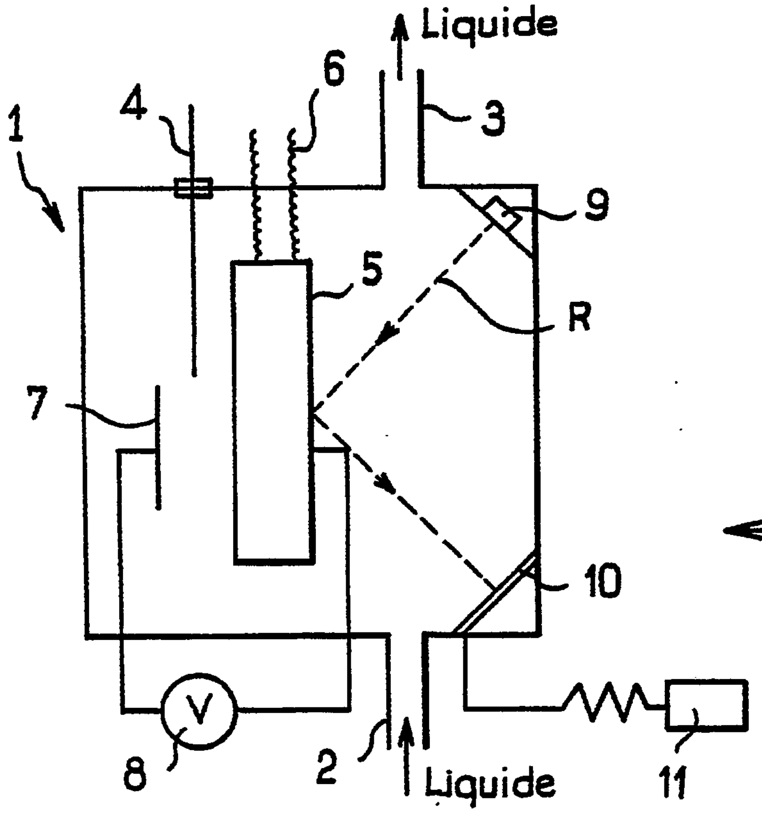
Liquide
1
4
6
3
9
5
R
7
10
V
8
2
Liquide
11

FIG_1

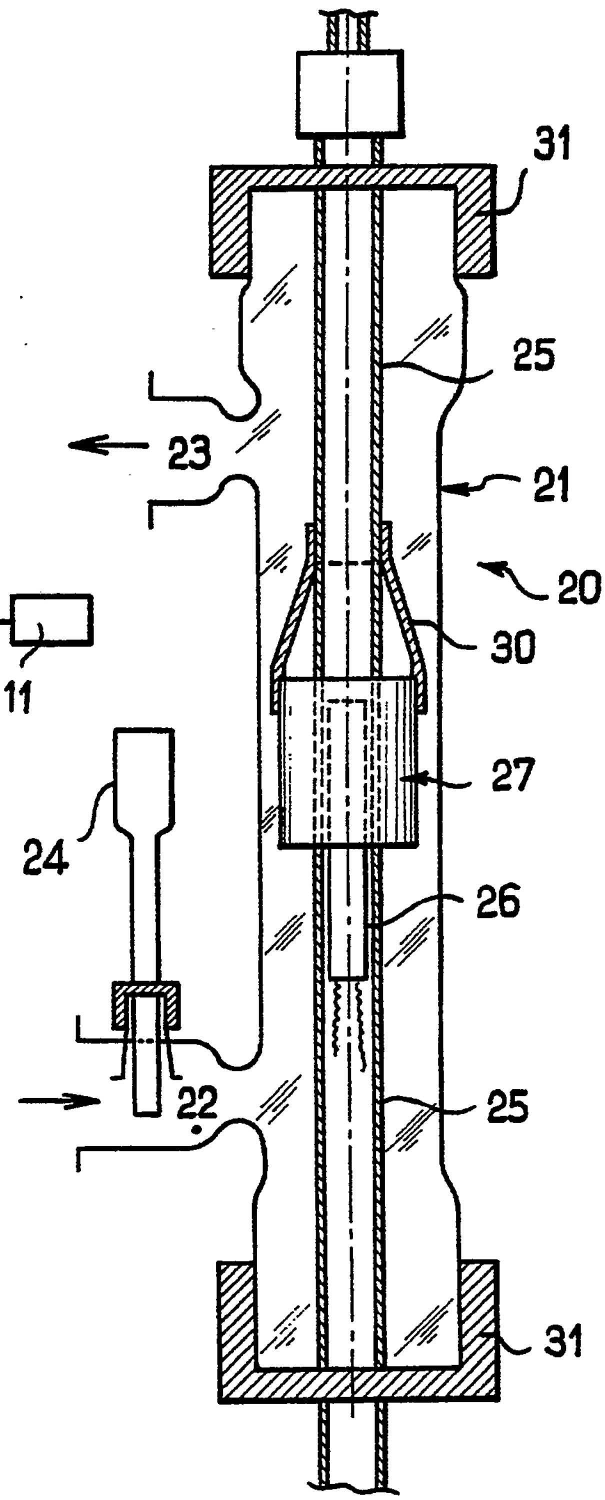
31
25
23
21
20
30
27
24
26
22
25
31

FIG_2

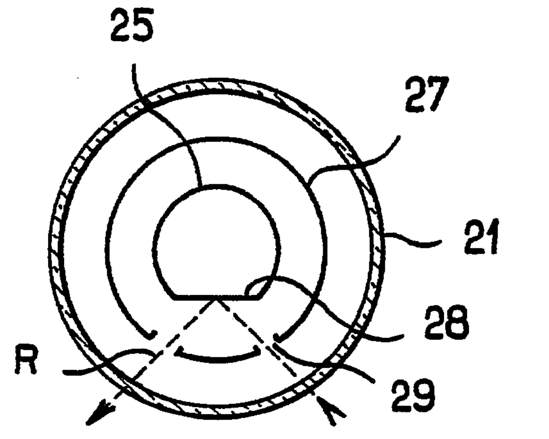


FIG_3c (coupe A-A)

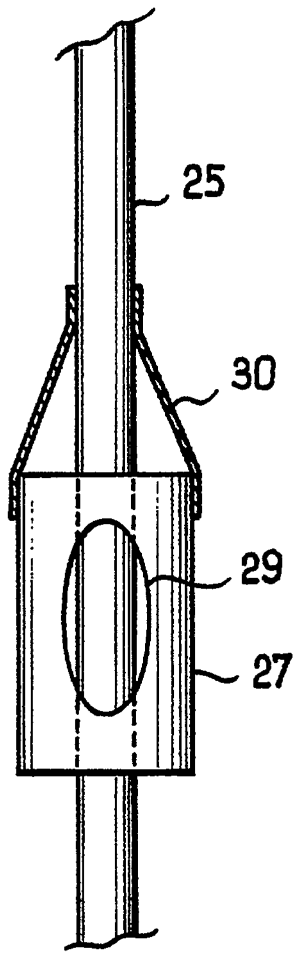


FIG_3b

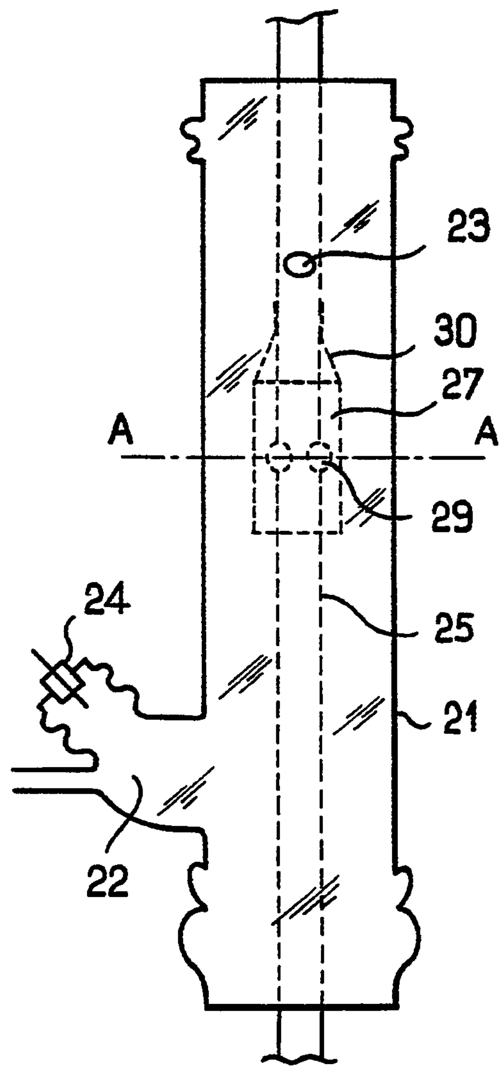


FIG_3a

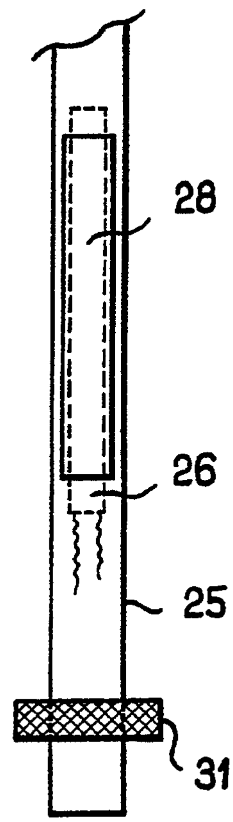


FIG_3d

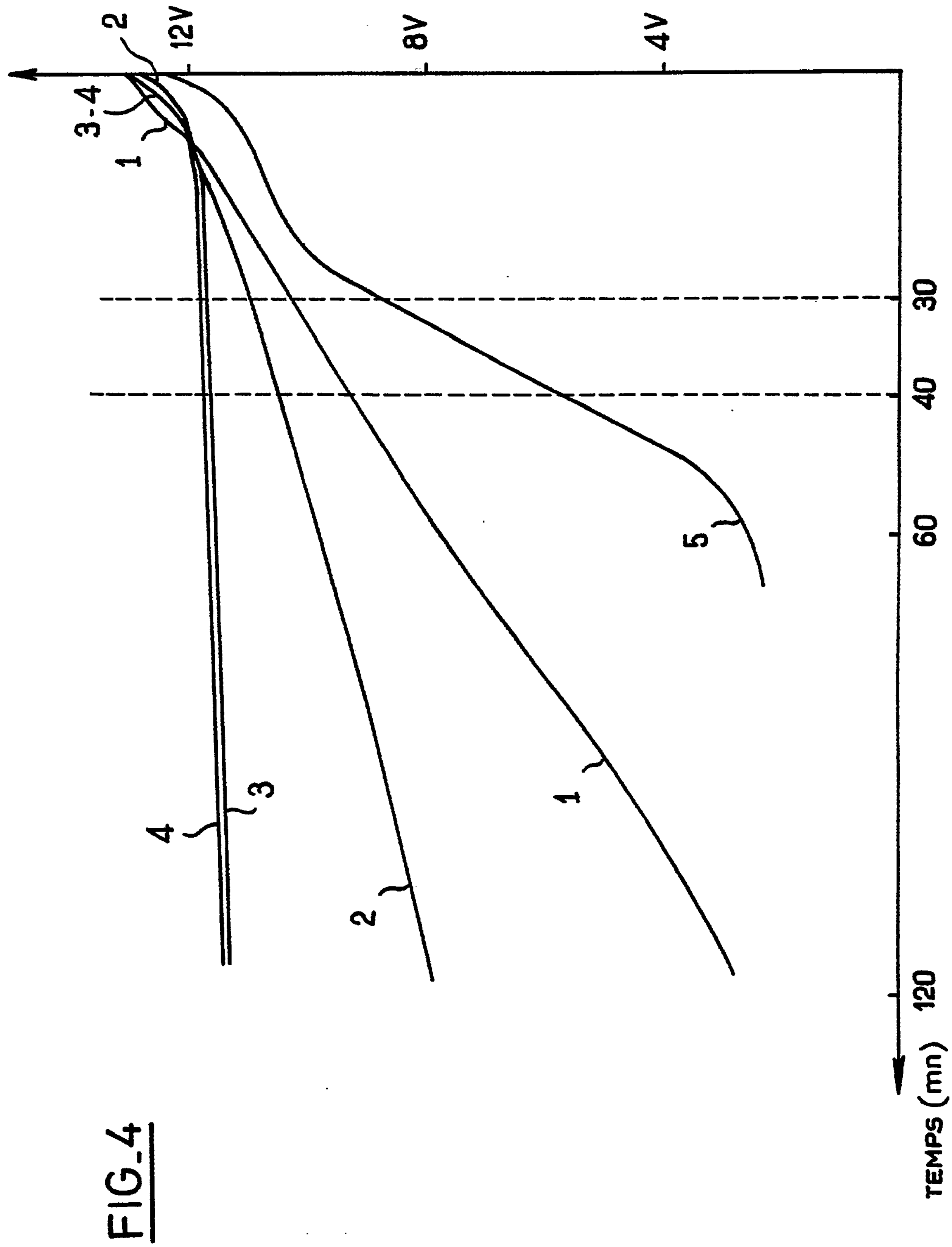


FIG_4